(19) Europäisches Patentamt

European Patent Office

Office européen des brevets

(11) **EP 2 329 904 B1**

(12) **EUROPEAN PATENT SPECIFICATION**

(45) Date of publication and mention
of the grant of the patent:
**08.07.2015   Bulletin 2015/28**

(51) Int Cl.:
***B23K 11/24*** *(2006.01)*   ***B23K 9/10*** *(2006.01)*

(21) Application number: **10177723.3**

(22) Date of filing: **20.09.2010**

(54) **Electric welding machine having a power circuit to limit voltage fluctuations induced in the mains**

Elektrische Schweissmaschine mit einem Kraftstromkreis zum Begrenzen der Spannungsfluktuationen, die im Stromnetz erzeugt werden

Machine à souder électrique dotée d'un circuit électrique pour limiter les fluctions de tecnsions induites dans le réseau électrique

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:  **20.10.2009   EP 09425412**

(43) Date of publication of application:
**08.06.2011   Bulletin 2011/23**

(73) Proprietor: **CEA Costruzioni Elettromeccaniche Annettoni S.p.A**
**23900 Lecco (LC) (IT)**

(72) Inventors:
• **Superti Furga, Gabrio**
**20052 Monza (IT)**
• **Tironi, Enrico**
**24124 Bergamo (IT)**

• **Toscani, Sergio**
**26841 Casalpusterlengo (LO) (IT)**
• **Annettoni, Francesco**
**23900 Lecco (IT)**

(74) Representative: **Ciceri, Fabio et al**
**Perani & Partners**
**Piazza San Babila, 5**
**20122 Milano (IT)**

(56) References cited:
**WO-A1-03/015973       US-A- 5 786 992**
**US-A1- 2004 079 739**

• **Maxim Integrated Products: "DC-DC Converter Tutorial", Internet Article, 29 November 2001 (2001-11-29), XP002674496, Retrieved from the Internet: URL:http://pdfserv.maxim-ic.com/en/an/AN20 31.pdf [retrieved on 2012-04-23]**

EP 2 329 904 B1

**Description**

The present invention relates to an electric welding machine having a power circuit that can limit voltage fluctuations, of flicker type induced in electric power supply mains, according to the preamble of claim 1.

The problem of power supply quality is becoming increasingly felt, due to the increasing number of both appliances that can induce noise in the power distribution network and appliances sensitive to noise in such power network.

In an attempt to address the above problem, increasingly stringent restrictions are imposed by standards to noise levels emitted from mains-connected appliances.

Flicker, i.e. fluctuation of the effective power voltage value, is a particularly undesired type of noise.

Flicker is assumed to be caused by voltage drop changes in the electric power supply mains, resulting from power drawn by loads.

The amount of flicker depends on changes of drawn power with respect to the failure level in the delivery node (i.e. on short circuit power) and on the frequency of such changes.

One of the effects of flicker, which is easily perceivable by a human eye, is the fluctuation of light flux transmitted by a lamp. Particularly, the human eye is more sensitive to a frequency a little lower than 10 Hz.

Electric welding machines are among flicker-causing loads, their operation principle being characterized by intermittent absorptions from the mains.

During operation of a welding machine, the power absorbed by the load connected to the welding machine fluctuates with frequencies of various levels and may be responsible for mains voltage deviations and hence flicker.

In view of the above state of the art, the object of the present invention is to minimize voltage flicker induced in the mains by a welding machine during welding processes.

According to the present invention, this object is fulfilled by a welding machine having a power circuit as characterized in claim 1.

The present invention provides an electric welding machine having a power circuit that uses energy accumulation means, such as capacitor banks, as an energy flywheel. As power drawing changes occur, such capacitor banks allow reduced fluctuation of the power being drawn and, as a result, limit the noise to the loads electrically proximate the welding machine.

The characteristics and advantages of the invention will appear from the following detailed description of one practical embodiment, which is illustrated without limitation in the annexed drawings, in which:

- Figure 1 shows a block diagram of a possible power circuit for an electric welding machine of the present invention;
- Figure 2 shows a first embodiment of a block diagram of the control means for controlling the power circuit of Figure 1 according to the present invention;
- Figure 3 shows a second embodiment of a block diagram of the control means for controlling the power circuit of Figure 1 according to the present invention;
- Figures 4, 5, 6 show respective possible implementations of certain regulator devices in the block diagram of the control means of Figure 3;
- Figures 7 and 8 are graphical simulations of the curves of effective current values in response to voltage flicker induced in the mains, when the power circuit of Figure 1 is implemented (Figure 7) or not implemented (Figure 8) in an electric welding machine respectively, with start-up transients being shown.

Referring to the accompanying figures, numeral 1 designates a power circuit which supplies power to an electric welding machine (not shown), such as an arc-welding machine.

The power circuit 1 is preferably disposed within the electric welding machine and comprises:

- an AC/DC converter stage 2, designed to receive an AC voltage $V_{AC}$ from the mains at its input and to generate a first DC voltage $V_{rect}$ at its output;
- an up converter stage 3, designed to receive a DC voltage $V_{rect}$ at its input and to generate a second DC voltage $V_{DC}$ at its output and
- an output stage 10, which is in electric communication with the up converter stage 3 and is designed to generate an output voltage Vsal suitable for the welding process at its output.

It shall be noted that the AC/DC converter stage 2 is embodied, for instance, by a rectifier, for rectifying the input power voltage $V_{AC}$.

It shall be noted that the up converter stage 3 allows the voltage $V_{DC}$ to be higher than the voltage $V_{rect}$ at the input of the up converter stage, whereas the output stage provides the required voltage for welding.

The voltage $V_{DC}$ may assume values between $V_{Dc,min}$ and $V_{DC,max}$, which limits are required for proper boost operation, insulation and maximum admissible voltage for the components of the power circuit 1.

The power circuit 1 further has a pair of output terminals 4A; 4B, which act as electrodes.

Particularly, one of these terminals 4A, 4B may be the object to be welded (not shown) and the other of these terminals 4A, 4B may be a bar that is usually secured in a clamp handle.

The output voltage $V_{sal}$ is available at these output terminals 4A, 4B, which means that by moving the bar (e. g. the output terminal 4A) into contact with the object (e.g. the output terminal 4B), a voltaic arc may be formed, whose voltage corresponds to the voltage $V_{sal}$, that can melt the bar metal, thereby forming a welded joint.

$p_1$ is intended to designate the power drawn from the mains (which actually coincides with the power delivered by the step-up chopper 3, less efficiency and switching noise) whereas $p_2$ designates the power flowing into the output stage 10.

Advantageously, in order to limit voltage fluctuations of flicker type, induced in the mains during welding, the power circuit 1 comprises energy accumulation means 5 interposed and in electric communication between the output of said up converter stage 3 and the output stage 10.

The energy accumulation means 5 can store an amount of energy "W" that is a function of the size of such energy accumulation means and of the up converter stage 3 considering the power of the welding machine, as described in greater detail hereinafter.

Such energy accumulation means 5 are designed to absorb the power changes that would otherwise occur in the mains, in response to the power drawn by the load during welding.

In other words, as power drawing changes occur, the power circuit 1 causes the mains to slowly follow the fluctuations, whereby the energy accumulation means 5, due to a consistent voltage change at their terminals, can level AC power deviations on the mains side.

The result is that fluctuations of the power being drawn are reduced, which limits noise (flicker) to the loads electrically proximate the welding machine. These energy accumulation means 5 act as an energy flywheel and, as power drawing changes occur, they allow reduced fluctuation of the power being drawn and, as a result, limit the noise to the loads electrically proximate the welding machine.

Therefore, with energy stored and with the welding machine not delivering electric power the DC voltage $V_{DC}$ generated at the output of the up converter stage 3 is provided at the terminals of the energy accumulation means 5.

The power circuit 1 for the electric welding machine may also have a down converter stage 9, which is designed to receive a second DC voltage $V_{DC}$ at its input and generate a third DC voltage at its output, the latter being deliverable, for instance, through the output stage 10, to the pair of output terminals 4A and 4B.

If the down converter stage 9 is implemented, the energy storage means 5 are interposed and in electric communication between the output of said up converter stage 3 and the input of said down converter stage 9.

The second down converter stage may be implemented as a embodied by a DC/DC step-down converter stage. This DC/DC step-down converter can ensure stabilization of the DC voltage supplied to the output stage 10 for generating the output voltage $V_{sal}$, i.e. the electric arc in the case of an arc welding machine.

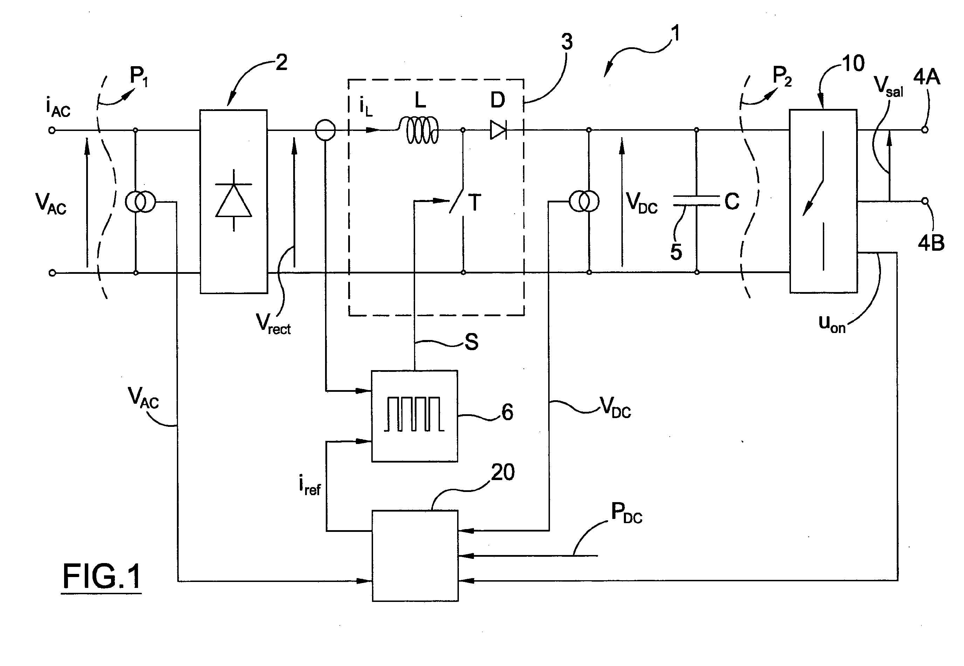

In one embodiment of the up converter stage 3, the latter may be implemented as a single DC/DC step-up converter, as shown in Figure 1, i.e. as a series of an inductor L, a diode D and a transistor T, the latter being controlled to the conduction or off state by the signal S.

In one alternative embodiment, the up converter stage 3 may comprise two DC/DC step-up converters in interleaved configuration.

Particularly, the interleaved configuration consists in that the two DC/DC step-up converters are connected in parallel, with phase shifted switching of the two converters. In this configuration, each transistor and is controlled to the conduction or off state by a corresponding control signal. Each control signal preferably has a constant switching frequency (which means that the conduction and off states of each transistor are constant with time, although durations may be different) but in phase opposition to the other.

In addition to the energy accumulation means 5, the power circuit 1 also comprises control means 6, for controlling the up converter stage 3.

Particularly, the control means 6 are designed to generate a control signal S required to control the up converter stage 3 and to receive an input reference signal Iref, for the power circuit 1 to absorb a substantially constant power $p_1$ from the mains, preferably equal to the average power $p_2$ required by the welding process in the long term.

For this purpose, the control means 6 are operatively connected with check means 20, which are configured to check the charge accumulated in the accumulation means 5 to generate the reference current signal Iref.

The check means 20 generate the reference signal Iref as a product of the mains voltage $V_{AC}$ after filtering (which provides $V_{AC,filt}$) and preferably after rectification (by simply determining the absolute value) by a signal G which is slowly variable with respect to the mains frequency in normal operating conditions, i.e.

$$\text{Iref} = G * V_{rect}$$

where V $_{rect}$ is the mains voltage V $_{AC}$, after filtering (V $_{AC,filt}$) and rectification, i.e. |V $_{AC,filt}$|.

For this purpose, the check means 20 shall not only receive the signal V $_{AC}$ at their input, but also at least the signal V $_{DC}$ representative of the voltage value on the energy accumulation means 5 and preferably also:

- a binary signal $u_{on}$, representative of the state of the welding machine (high if the welding machine 1 is delivering a significant current to the electrodes 4A, 4B, low if it is in an *idle* state);
- a signal pdc, representative of the power flowing into the accumulation means 5.

It shall be noted that the control means 6 and the check means 20 may be implemented in a microcontroller with known techniques not described herein.

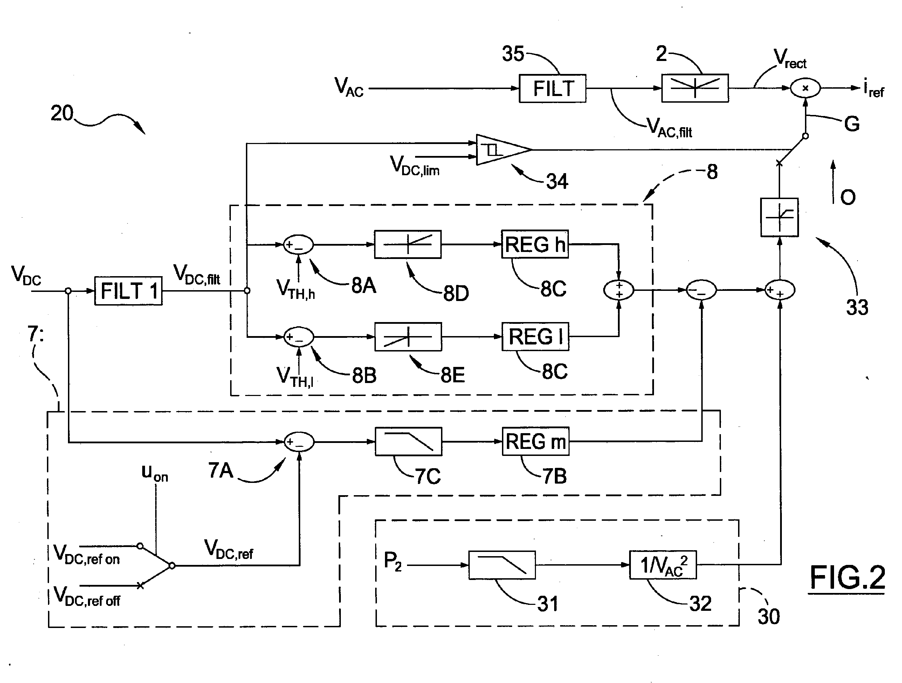

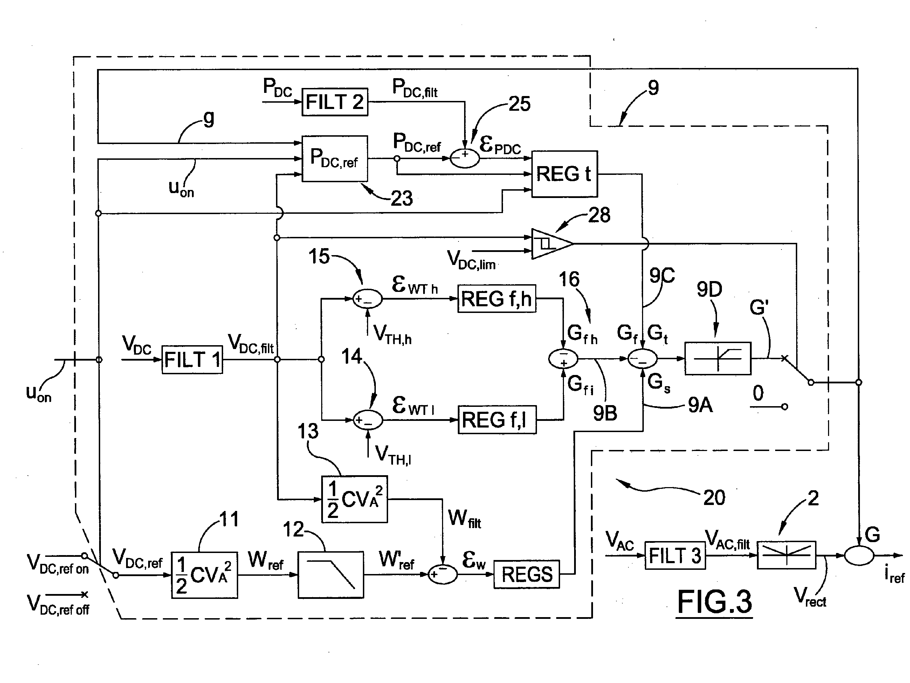

In a first embodiment (Figure 2) the signal G (and hence the reference current signal Iref) is generated by two regulating circuits 7, 8 and a feedforward term 30 whereas in a second embodiment (Figure 3), it is generated by a regulating circuit 9 suitable to check the state of the energy accumulated in the accumulation means 5.

Particularly, still referring to Figure 2, the regulating circuit is always on; conversely, the circuit 8 can be actuated or not according to the value of voltage V $_{DC}$ at the terminals of the energy accumulation means 5. Therefore, according to the voltage value V $_{DC}$ at the terminals of the energy accumulation means 5, either of the regulating circuits 7, 8 or both are actuated. In other words, the regulating means 7, 8 are configured to receive at their inputs at least the voltage value V $_{DC}$ on the energy accumulation means 5 and the power $p_2$ absorbed by the output stage, to generate the reference current value Iref at their outputs, required for operation of the control means 6.

It shall be noted that, during the welding process, the voltage value V $_{DC}$ at the terminals of the energy accumulation means 5 changes and the operation of the regulating circuits 7, 8 is dependent on that particular voltage value V $_{DC}$ at the terminals of the energy accumulation means 5 and on the electric power $p_2$.

A feedforward term 30 is also provided, to cause the system to operate in a point close to equilibrium of mean power values *p1 and p2* in the long term.

Particularly, the first regulating circuit 7 is designed for the voltage V $_{DC}$ at the terminals of the energy accumulation means 5 to be free to change within a predetermined range of values, with the lowest limit being designated by V $_{th,1}$ and the highest limit being designated by V $_{th,h}$, whereas its mean value is maintained at a predetermined voltage value V$_{DC,ref}$.

Both the first regulating circuit 7 and the feedforward term 30 in the microcontroller advantageously maintain the mean voltage value at the terminals of the energy accumulation means 5 equal to the predetermined value V$_{DC,ref}$.

For this purpose, in one embodiment, the first control circuit 7 will comprise:

- a first comparator device 7A for comparing the voltage V$_{DC}$ at the terminals of said energy accumulation means 5 with such predetermined voltage value V$_{DC,ref}$,
- a low pass filter 7C, whose passband is coordinated with the characteristic frequencies of the noise (flicker) to be reduced;
- a first regulator device 7B, preferably of proportional-integral type, whose gain is coordinated with the low pass filter 7C; so that the assembly composed of the regulator 7B and the low pass filter 7C generate low dynamics with respect to the frequencies of the noise (flicker) to be reduced.

It shall be noted that, if the noise is of the flicker type, it has a characteristic frequency of about 10 Hz, which allows control of the cut-off frequency of the low pass filter 7C and hence the regulator 7B.

Therefore, at the terminals of the accumulation means 5 voltage is maintained between two levels V$_{th,h}$ and V$_{th,1}$, which preferably have very distant values, thereby ensuring as wide a range as possible, to prevent the welding machine from operating in conditions that might induce voltage fluctuations, such as flicker, in the mains.

Particularly, the highest limit V$_{th,h}$ of the range is determined by the maximum admissible voltage for the DC/DC converter/s of the stage 3, whereas the lowest limit V$_{th,1}$ of the range is determined by the minimum operation value for the DC/DC converter/s of the stage 3.

The following relation shall apply:

$$V_{DC,min} < V_{DC,ref,on} < V_{DC,ref,off} < V_{DC,max}$$

The reference value Vdc,ref changes according to the state of the binary signal $u_{on}$. It will be equal to V$_{DC,ref,on}$ V$_{th,h}$ when $u_{on}$ has a high logic level, and to V$_{DC,ref,off}$ when $u_{on}$ has a low logic level. V$_{DC,ref,off}$ will be equal to or slightly lower than V$_{th,h}$; V$_{DC,ref,on}$ will be definitely lower or will fall in a range from V$_{th,1}$ to V$_{th,h}$. It will be appreciated that $u_{on}$ conventionally has a high logic level when the welding machine is delivering a significant current, and a low logic level when it is not. In this operating state, the voltage value $V_{DC}$ and the corresponding value of energy stored W in the accumulation means 5 are close to the highest value at welding start-up. Advantageously, by delivering energy during welding start up transient, the energy accumulation means 5 can more efficiently attenuate the abrupt increase of power required of the mains, with flicker limiting effects.

Likewise, when the electric welding machine operates in full power mode, the voltage reference $V_{DC,ref}$ is advantageously set to a rather low value, to most efficiently attenuate, by energy absorption, the decrease of power required of the mains during the transient at the end of the welding process.

The second regulating circuit 8 is designed in such a manner that, if said voltage $V_{DC}$ at the terminals of the energy accumulation means 5 reaches one of the limits of said range of values, due to a large perturbations in the power p2, then the voltage $V_{DC}$ at the terminals of the energy accumulation means 5 is forced to be set to one of the limit values of the range.

For example, if the voltage $V_{DC}$ is equal to or higher than the highest limit $V_{th,h}$ then the second control circuit 8 limits such voltage $V_{DC}$ to the value of such highest limit.

For this purpose, in one embodiment, the second control circuit 8 comprises:

- a filter FILT1 to remove the switching noise and ripple caused by single-phase rectification from the signal $V_{DC}$; this provides the signal $V_{DC,filt}$;
- a comparator device 8A in series with a clipping circuit 8D;
- a comparator device 8B in series with a clipping circuit 8E;
- two regulators 8C, preferably of proportional or proportional-integral type, whose gains are higher than those of the regulator 7B; particularly, the gains of the regulators 8C are calibrated with dynamics adapted to maintain the voltage $V_{DC}$ at the terminals of the energy accumulation means 5 within the admitted voltage limit values (i.e. within the highest limit value $V_{th,h}$ or the lowest limit value $V_{th,1}$) or return it within such voltage limits within a few periods related to the electric mains frequency.

It shall be noted that the comparator device 8A is adapted to compare the voltage (after filtering) $V_{DC,filt}$ at the terminals of the energy accumulation means 5 with the voltage value $V_{th,h}$ representative of the highest limit of the range and the clipping circuit 8D is adapted to limit the voltage to the highest value $V_{th,h}$.

The comparator device 8B is also adapted to compare the voltage (after filtering) $V_{DC,filt}$ at the terminals of the energy accumulation means 5 with the voltage value $V_{th,1}$ representative of the lowest limit of the range and the clipping circuit 8E is adapted to limit the voltage to the lowest value $V_{th,1}$.

In other words, if the filtered voltage $V_{DC,filt}$ at the terminals of the energy accumulation means 5, reaches the lowest limit $V_{th,1}$ during the welding process, then the second regulating circuit 8 maintains the voltage value at the terminals of the energy accumulation means 5 equal to the value $V_{th,1}$, through the clipper 8E and the regulator 8C, and the like occurs if the voltage $V_{DC,filt}$ at the terminals of the energy accumulation means 5 reaches the highest limit $V_{th,h}$ (through the clipper 8D and the regulator 8C).

Therefore, when the first circuit 7, i.e. the regulator 7B, is only operating, the current Iref changes very slowly, so that the effective value of current Iac absorbed by the step-up converter stage 3 changes very slowly with respect to flicker frequencies, so that flicker does not occur in the mains, whereas when the operating circuit is the second circuit 8, i.e. the regulator 8C, Iref changes quickly, so that the current absorbed by the step-up converter stage 3 can effectively regulate the voltage $V_{DC}$, although flicker-type noise may occur.

In both cases, the current Iac absorbed by the step-up converter stage 3 reproduces the mains voltage waveform and is in phase therewith.

The feedforward term 30 is designed by measuring the power p2 absorbed by the output stage of the welding machine, filtering it by a properly tuned low-pass filter 31 and dividing it by the square number of the nominal voltage at the AC side, by the block 32. The cut-off frequency of the filter is selected with the purpose of significantly attenuating the spectral components p2 that would cause flicker.

The signal G, as set forth in the first embodiment, may be saturated by a saturation device 33 whose lower threshold is zero and whose higher threshold represents the maximum current that the stage 3 can handle. When the voltage on the accumulation elements (with noise filtered off) $V_{DC,filt}$ exceeds a limit value $V_{DC,lim}$, falling in a range from $V_{th,h}$ to $V_{DC,max}$ (comparison being carried out by a hysteresis comparator 34, possibly implemented in the microcontroller), the signal G is forced to zero, i.e. the power flowing into the DC link is reset. This is a protection device that prevents the DC link from being affected by voltages that may be dangerous for users and components.

The signal $V_{AC}$ may be suitably filtered to remove any noise. For this purpose, an appropriate filtering block 35 may be introduced.

Considering now the second embodiment of the check means 20, also referring to Figure 3, the current Iref (=$G*V_{rect}$ where $V_{rect}$ is the AC voltage $V_{AC}$ at the input of the power circuit 1 after filtering by a filtering block FILT3 and rectification by the block 2 i.e. $|V_{AC,filt}|$) at the input of the control means 6 may be generated according to the regulating circuit 9 whose operation is based on the direct check (quadratic with respect to voltage) of the energy accumulated in the accumulation means 5.

In the second embodiment, the reference current value Iref may not only be generated as a function of the voltage $V_{DC}$ (i.e. the voltage at the terminals of the accumulation means 5) but also considering the value of power $p_{DC}$ flowing into the accumulation means 5 and considering the state of the binary signal $u_{on}$.

This binary signal $u_{on}$ has a high value if the welding machine 1 is delivering a significant current to the electrodes 4A, 4B, and a low value if current is close to zero.

Particularly, the accumulated energy checking logic 9 operates on all DC side magnitudes and neglects the rectification ripple. Therefore the logic inputs $V_{DC}$ and $p_{DC}$ shall be appropriately filtered to remove 100 Hz ripple caused by single-phase power drawing, as well as inevitable noise (particularly switching noise). For this purpose, the filtering blocks FILT1 and FILT 2 were introduced, whose outputs are $V_{DC,filt}$ e $p_{DC,filt}$ respectively.

The voltage $V_{AC}$ may be filtered to remove any noise by the block FILT3, whose output is $V_{ACfilt}$.

The signal G required to define the reference signal Iref ($=G*|V_{AC,filt}|$) is generated from a combination of preferably three contributions, i.e. G=Gs + Gf +Gt; each contribution represents the output 9A,9B,9C of a regulation loop of the logic 9 respectively.

The signal G so composed is saturated by a saturation device 9D whose lower threshold is zero and whose higher threshold represents the maximum current that the stage 3 can handle.

The first contribution $G_s$ is the output 9A of the slow regulator *REGs.* This slow regulator *REGs* has two basic tasks. The first task is to use the energy stored in the accumulation means 5 to reduce the oscillations of the absorbed power that may cause *flicker* during welding. The second task is to check (although with a very slow dynamics) the voltage value Vdc less the rectification ripple (i.e. the value $Vdc_{filt}$).

Particularly, during the welding process, the voltage $V_{DCfilt}$ at the terminals of the accumulation means 5 is required to oscillate about a certain average reference value $V_{DC,ref,on}$. On the other hand, $V_{DCfilt}$ will have to assume the value $V_{DC,ref,off}$ when the welding machine 1 is in the *idle* state.

The following inequality shall obviously apply:

$$V_{DC,min} < V_{DC,ref,on} < V_{DC,ref,off} < V_{DC,max}$$

The considerable difference *between* $V_{DC,ref,on}$ $V_{DC,ref,off}$ is strictly associated with the use of the changes of stored energy to smoothen the transients of the power drawn from the mains during start-up and shut-down.

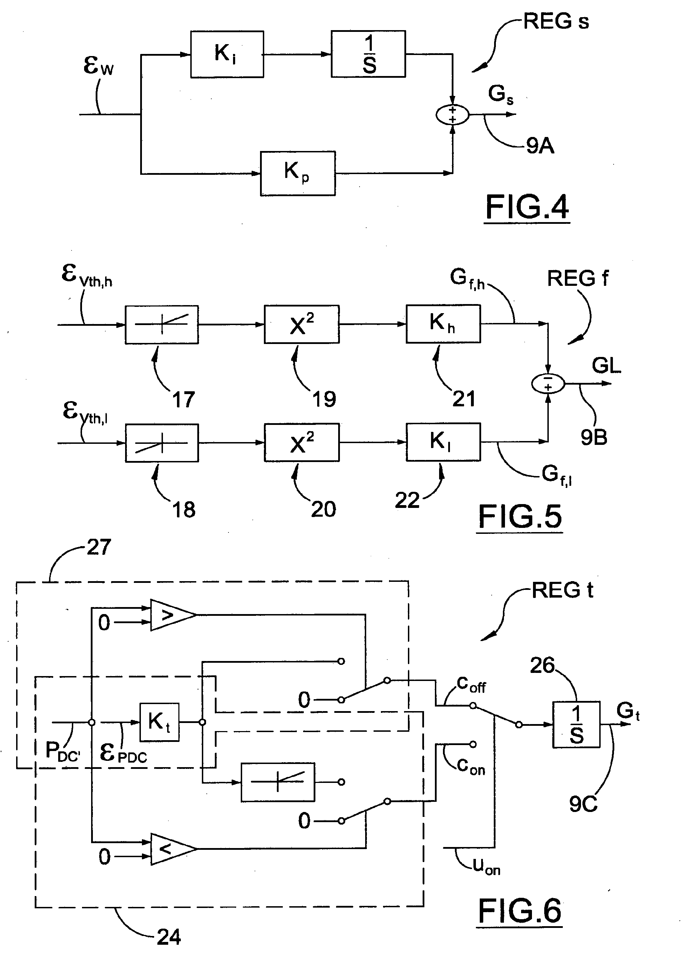

To this end, the regulator *REGs,* one embodiment whereof is shown in Figure 4, operates on the basis of the accumulated energy error $\varepsilon_w$, i.e. the error between the accumulated energy less the rectification ripple (designated $w_{filt}$) and a reference energy $W_{ref}$, i.e.:

$$\varepsilon_w = w_{ref} - w_{filt}.$$

For this purpose the regulator *REGs* may be a simple **PI** (proportional-integral) regulator. Particularly, the task that the slow regulator *REGs* is designed to accomplish is essentially that of low-pass filtering of the welding power (scheme of Figure 4), so that only the harmonic components sufficiently lower than flicker-causing frequencies are left in the power absorbed from the mains.

It shall be noted that the signal $w_{ref}$ is simply generated by squaring the signal $Vdc_{,ref}$, dividing by two, and multiplying by the capacitance value C of the accumulation means 5; this may be obtained by means of a block 11 designed to execute the following function:

$$w_{ref} = \tfrac{1}{2}*C*v^2 \text{ where } v=Vdc_{,ref}$$

where $v=Vdc_{,ref}$

The value assumed by $V_{DC,ref}$, from which the reference of the regulator *REGs* depends, is a function of the state of the binary signal $u_{on}$ When this signal $u_{on}$ is high (i.e. the welding machine 1 is performing the welding process) the reference $v^2_{DC,ref}$ will be $V^2_{DC,ref,on}$, when it is low, it will be $V^2_{DC,ref,off}$.

Due to the proportional action of the regulator *REGs,* any abrupt transition of the reference between the two possible values would cause a step on the signal G which would generate noise in the mains. In order to prevent this drawback, the reference value for the regulator is $w'_{ref}$, obtained from $w_{ref}$ by low-pass filtering 12.

Another option for generating the signal w'$_{ref}$ is to cause it to change between the two possible values along a ramp.

It shall be noted that the signal w$_{filt}$ is simply generated by squaring the signal V$_{DC,filt}$, dividing by two, and multiplying by the capacitance value C of the accumulation means 5; this may be obtained by means of a block 13 designed to execute the following function:

$$w_{filt} = \tfrac{1}{2}*C*v^2 \text{ in cui } v=Vdc_{,filt}$$

The second contribution Gf to the signal G is obtained through the regulators *REGf*. The regulator *REGs* controls V$_{DC,filt}$ in an intentionally weak manner. In certain conditions, the voltage V$_{DC,filt}$ might exceed the upper and lower limits. Therefore, this regulator *REGf* should be introduced to avoid this possibility, i.e. to maintain the voltage V$_{DC,filt}$ the between the lower limit V$_{DC,min}$ and the upper limit V$_{DC,max}$. For this purpose, appropriate voltage thresholds are introduced, i.e. a lower threshold $V_{th,l}$ and an upper threshold $V_{th,h}$ so that:

$$V_{DC,min}<V_{th,l}<V_{DC,ref,on}<V_{DC,ref,off}\leq V_{th,h}<V_{DC,max}$$

When the voltage V$_{DC,filt}$ drops below the lower threshold $V_{th,l}$ (i.e. negative error $\varepsilon V_{th}l$, that can be provided in the diagram of Figure 3 by a summing node 14), a regulator REGf,1 will provide a positive contribution Gf,1 to the signal G, with a rather fast dynamics. This tends to quickly increase the voltage at the terminals of the capacitor. Likewise, when the voltage at the terminals of the accumulation means 5 exceeds Vth,h (i.e. positive error $\varepsilon V_{th,h}$, that can be provided in the diagram of Figure 3 by a summing node 15), a regulator REGf,h will promptly provide a negative contribution (-Gf,h) to the signal G, to reduce the V$_{DC,filt}$.

Therefore, the second contribution Gf to the signal is obtained by a summing node 16 that can execute the following function:

$$Gf = Gf,l - Gf,h$$

Since the filtered voltage V$_{DC,filt}$ flows back into the feedback loop, the current absorbed by the mains due to the action of this regulator *REGf* remains appreciably sinusoidal.

Referring to Figure 5, which shows an embodiment of the pair of regulators *REGf for* the branch in which the voltage at the terminals of the accumulation means 5 exceeds V$_{th,h}$ (saturation block 17) and for the branch in which the voltage at the terminals of the accumulation means 5 is lower than V$_{th,1}$ (saturation block 18), it can be noted that the selection of a quadratic action (respective blocks 19, 20) causes the action of the regulators *REGf* to be rather weak (and hence to have a poor effect on *flicker*) as soon as the trigger threshold is exceeded.

Nevertheless, its action takes force as quickly as V$_{DC,filt}$ is low with respect to $V_{th,l}$: the lower voltage limit is prevented from being exceeded in an increasingly strong manner. Obviously, calibration of the gains of regulators (block 21 for branch $\varepsilon V_{th,h}$ and block 22 for branch $\varepsilon V_{th,l}$) is strictly related to the maximum power of the welding machine, to the accumulation amount and to the values of the trigger thresholds and the minimum and maximum admissible voltages. Quick regulation obviously involves the problem of generating *flicker* in the mains.

The same principle applies to the regulator *REG f,h*.

The third contribution Gt to the signal G represents the means for management of start-up and shut-down transients of the welding machine 1.

The regulator *REGt* uses the output G of the check means 20 $_t$ to check the development of the discharge of the accumulation means 5, and indirectly forces a gradual increase of power $_{P1,filt}$.

The accumulation means 5 are initially at the voltage V$_{DC,filt}$(0); during operation, they will approach the value $V_{DC,ref,on}$. If V$_{DC,filt}$(0)>V$_{DC,ref,on}$ (as it normally occurs) the energy $\Delta W_{ch}$:

$$\Delta W_{ch}=\frac{1}{2}C\left(v^2_{DC,filt}(0)-V^2_{DC,ref,on}\right)$$

may be used to smoothen the increase of the power drawn from the mains.

*Start-up control block 24*

At time zero, no assumption can be made about what the absorption of the welding machine 1 will be, and hence about which value will be reached by the power p2, and with which progress. By caution, such power may be assumed to reach stepwise the maximum possible value according to the current welding machine settings. In this case, the desired progress of the power drawn by the mains will be:

$$p_1(t) = [P_{2,max} - G(0)V_{AC}^2]\left(\frac{t}{T_{on}} - 1\right) + P_{2,max}$$

Where t is from 0 to $T_{on}$ (duration of the power ramp). The slope $S_{on}$ of the ramp is given by:

$$S_{on} = \frac{P_{2,max} - G(0)V_{AC}^2}{T_{on}}$$

The capacitor power flowing into the accumulation means 5 would be:

$$p_{DC,filt}(t) = [P_{2,max} - G(0)V_{AC}^2]\left(\frac{t}{T_{on}} - 1\right)$$

Where t is from 0 to $T_{on}$.
As a whole, the energy that the capacitor had to supply to obtain a more gradual start-up will be:

$$\Delta W_{on} = \frac{P_{2,max} - G(0)V_{AC}^2}{2} T_{on}$$

The duration of the start-up ramp that can be obtained with maximum utilization of the energy changes on the capacitor is derived by equaling ΔWch and ΔWon. Therefore:

$$T_{on} = C \frac{V_{DC,filt}^2(0) - V_{DC,ref,on}^2}{P_{2,max} - G(0)V_{AC}^2}$$

If the start of the welding process is detected (time t=0 in which the binary signal $u_{on}$ switches from 0 to 1), then the start-up management block 23 is actuated. Therefore the voltage $V_{DC,filt}$ is measured, and the signal G is stored at that instant in the block 23. Assuming that $V_{DC,filt}(0) > VDC,ref,on$ (i.e. if there is enough energy obtain a smoother start-up), $T_{on}$ is calculated with the preceding formula, and the above block 23 generates a reference signal $P_{DC,ref}$ of the following type:

$$p_{DC,ref}(t) = [P_{2,max} - G(0)V_{AC}^2]\left(\frac{t}{T_{on}} - 1\right) \quad se \ t \leq T_{on}$$
$$p_{DC,ref}(t) = 0 \qquad\qquad\qquad altrimenti$$

Therefore an error signal $\varepsilon_{PDC}$ is generated by the summing node 25 as a difference between:

$$\varepsilon_{PDC} = P_{DC,ref} - P_{DC,filt} \ \text{(output from the block FILT2)}$$

The error signal $\varepsilon_{PDC}$ is introduced at the input of the regulator *REGt,* particularly the block 24 designed to control start-up of the welding machine 1. This block 24 generates a signal $C_{on}$ of the following type:

$$\begin{cases} c_{on}(t) = K_G \left( p_{DC,ref} - p_{DC,filt} \right) & se \ \ p_{DC,ref} > p_{DC,filt} \ \wedge \ p_{DC,ref} < 0 \\ c_{on}(t) = 0 & se \ \ p_{DC,ref} \le p_{DC,filt} \ \vee \ p_{DC,ref} \ge 0 \end{cases}$$

Then, the signal $c_{on}$ is transmitted to an integrator 26. Such integrator 26 should be the same as the slow regulator *REGs*; this is not shown in the block diagram of Figure 6 for clarity.

It should be noted that behavior depends on the sign of the error $\varepsilon_{PDC}$, which is a basic aspect to handle the impossibility of foreseeing the progress of power p2 during start-up.

*Shut-down block 27*

A very similar description applies to machine shut-down. At the end of the welding process, the power p2 promptly switches from the value P2 to 0. With no further arrangement, the energy regulator would operate in a very weak manner, whereby the power $p_{1,filt}$ would be actually stuck with the value assumed just before shut-down. Voltage on the accumulation means 5 would quickly increase to the upper threshold $V_{th,h}$. Then the fast regulator would be abruptly triggered, and the power $p_{1,filt}$ would be quickly reduced to zero. This kind of situation should be carefully avoided; the approach that was used for start-up can be used herein. As usual, the purpose is to cause the power $p_{1,filt}$ to gradually move from the initial value to zero along a ramp (excepting the ripple associated with single-phase power drawing). The basic difference from the start-up transient is that the final value of $p_{1,filt}$ is precisely known. The accumulation means 5 are initially at the voltage $V_{DC,filt}(0)$ (less the usual 100 Hz ripple); after shut-down, they will approach the value $V_{DC,ref,off}$. If $V_{DC,filt}(0) < V_{DC,ref,off}$ (which condition is always met, excepting very particular cases) $\Delta W_{dch}$ is defined, i.e. the energy that the capacitor can store to smoothen welding shut-down transients:

$$\Delta W_{dch} = \frac{1}{2} C \left( V_{DC,ref,off}^2 - v_{DC,filt}^2(0) \right)$$

At the welding shut-down time, the power p1,filt assumes the following value:

$$p_{1,filt}(0) \cong G(0) V_{AC}^2$$

The desired progress of the power p1,filt may be pre-calculated:

$$p_{1,filt}(t) = G(0) V_{AC}^2 \left( 1 - \frac{t}{T_{off}} \right)$$

In this case, the power flowing into the capacitor will be:

$$p_{DC,filt}(t) = G(0) V_{AC}^2 \left( 1 - \frac{t}{T_{off}} \right)$$

The energy that should be stored in the capacitor to mitigate shot-down transients is:

$$\Delta W_{off} = \frac{G(0) V_{AC}^2}{2} T_{off}$$

The duration of the shut-down ramp that can be obtained with maximum utilization of the energy changes on the capacitor is derived by equaling $\Delta W_{dch}$ and $\Delta W_{off}$. Therefore:

$$T_{off} = \frac{C\left(V_{DC,ref,off}^2 - v_{DC,filt}^2(0)\right)}{G(0)V_{AC}^2}$$

The welding shut-down management system is actuated as soon as the signal switches from the high logic case to the low logic case; the start-up management system is deactivated. Usually, 0 is considered as the welding shut-down time; at that time the (filtered) voltage is measured on the DC *link*. The latter is assumed to be equal to $V_{DC,filt}(0)$. At the same time, the logic stores the value of the signal G; it is assumed to be $G(0)$. Assuming that $V_{DC,filt}(0) < V_{DC,ref,off}$ (i.e. if the capacitor can store energy to smoothen the machine shut-down transient) $T_{off}$ is determined by the previous formula. Likewise a reference progress is generated for the power $p_{DC,filt}$, which is equal to the one determined above, assuming *that* $P_{1,ref}$ drops to zero along a ramp.

$$p_{DC,ref}(t) = G(0)V_{AC}^2\left(1 - \frac{t}{T_{off}}\right) \quad se\ t \leq T_{on}$$
$$p_{DC,ref}(t) = 0 \quad altrimenti$$

The difference between the measured progress and the reference progress is used to provide a signal $c_{off}$ as follows:

$$\begin{cases} c_{off}(t) = K_G\left(p_{DC,ref} - p_{DC,filt}\right) & se\ \ p_{DC,ref} > 0 \\ c_{off}(t) = 0 & se\ \ p_{DC,ref} \leq 0 \end{cases}$$

Then $c_{off}$ is sent to an integrator (the same as the regulator REGs, which is used to obtain the signal $c_{on}$). This will provide the signal Gt during shut-down of the welding machine. Therefore, the power $p_{DC,filt}$ is forced to follow the reference, and the power $p_{1,filt}$ is hence decreased in a ramp-like fashion. It shall be noted that, since the progress of p2 is not known with certainty (unlike start-up), there will be no need for use of a regulator that changes its behavior according to the error sign.

As an emergency protection, the control logic also comprises a hysteresis comparator 28 that compares the voltage value $V_{DC,filt}$ with the limit value $V_{DC,lim}$ that cannot be exceeded for safety and integrity of the machine. As soon as $V_{DC,filt}$ reaches $V_{DC,lim}$, the output of the comparator forces the signal G and hence the reference current, to zero, to inherently prevent the occurrence of potentially dangerous situations for the operator and the machine.

In a preferred embodiment, the energy accumulation means 5 are embodied by a plurality of capacitor banks electrically connected to each other in parallel, in series or in series-parallel combinations.

The overall sizing of capacitor banks, which is represented in Figure 1 as a single capacitor C, is a function of the maximum and minimum admissible operating voltages of the step-up stage 3, and obviously of the rated power of the welding machine and the characteristics of the dielectric that forms the capacitors, as well as the acceptable flicker level, given the typical waveforms of the power p2 absorbed by the output stages.

Sizing of the capacitor bank/s, as mentioned above, requires them to be able to absorb the power deviations of the welding process.

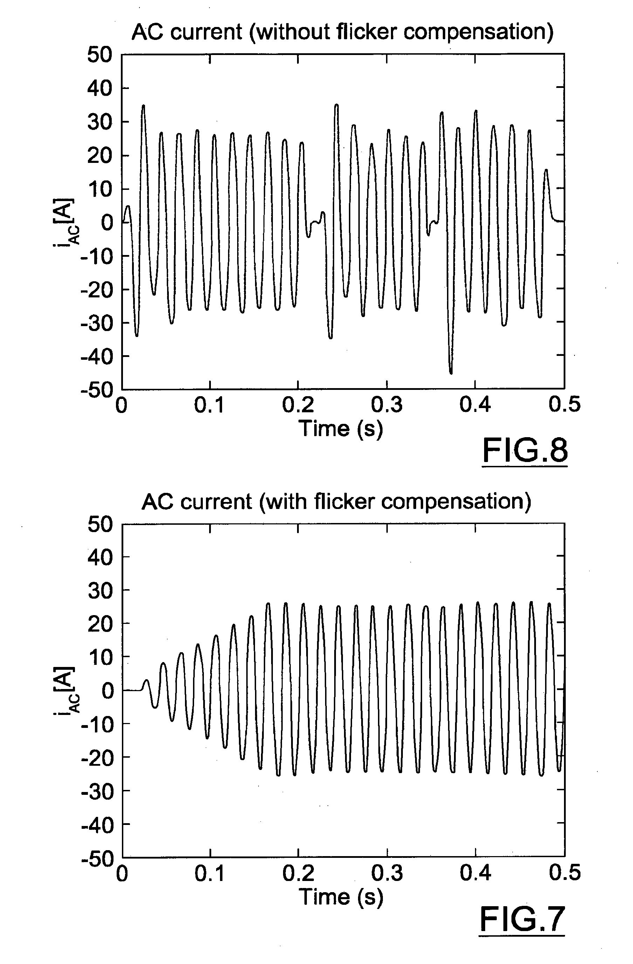

Referring to Figure 7, assuming the above, it shall be noted that with a mains impedance compliant with IEC 61000-3-3 and 61000-3-11 standards, during a typical MMA welding operation, the effective value of AC current has actually zero residual perturbations.

Referring to Figure 8, with the above quantities and without the power circuit 1 for flicker removal, welding power changes directly affect the mains, with the curve of the effective AC current having peaks that induce flicker in the mains.

Those skilled in the art will obviously appreciate that a number of changes and variants may be made to the arrangements as described hereinbefore to meet specific needs, without departure from the scope of the invention, as defined in the following claims.

**Claims**

**1.** An electric welding machine having a power circuit for supplying power to said welding machine from the mains, said power circuit comprising:

- an AC/DC converter stage (2), designed to receive an AC voltage (VAC) from said mains at its input and to generate a first DC voltage (Vrect) at its output;
- an up converter stage (3), designed to receive said first DC voltage (Vrect) at its input and to generate a second DC voltage (VDC) at its output;
- an output stage (10) is in electric communication with said up converter stage (3), and designed to generate an output voltage (Vsal) suitable for the welding process at its output;
- a pair of output terminals (4A, 4B) designed to have a load connected thereto, said output voltage (Vsal) being available at said output terminals;
- energy accumulation means (5) interposed and in electric communication between the output of said up converter stage (3) and the output stage (10); **characterized in that** it comprises control means (6) for controlling said up converter stage (3) as a function of the value of a reference signal (Iref), check means (20) for generating said reference signal (Iref), which are configured to receive at their input at least the value of said second voltage (VDC) on said energy accumulation means (5), so that said energy accumulation means (5) are able to absorb power changes of said mains as said output voltage ($V_{sal}$) changes, due to the power absorbed by the load, to limit voltage fluctuations of flicker type induced in the mains during welding,
and that said energy accumulation means (5) comprise a plurality of capacitor banks (C) which are sized as a function of the maximum and minimum operating voltage admissible by said up converter stage (3) as well as the rated power of said welding machine, said plurality of capacitor banks (C) being configured to act as energy flywheel and, as power drawing changes occur, being configured to absorb fluctuation of the power being drawn and, as a result, to limit the noise to the loads electrically proximate the welding machine.

2. An electric welding machine as claimed in claim 1, wherein said check means (20) are designed to receive at their input the value of the power (pDC) flowing into said accumulation means (5) and the value of a binary signal (uon) representative of the state of said welding machine, said reference signal (Iref) being adapted to be expressed as:

$$\mathrm{Iref} = G * |V_{AC},\mathrm{filt}|$$

where:

- G is a signal that is a function of the value of said second voltage (VDC), the value of the power (pDC) flowing into said accumulation means (5) and the value of the binary signal (uon) and
- VAC,filt representing said first DC voltage (Vrect), i.e. the supply voltage (VAC), preferably filtered by a filtering block (FILT3) of said power circuit (1).

3. An electric welding machine as claimed in claim 2, wherein said check means (20) comprise a regulating circuit (9) designed to generate said signal G from the combination of three contributions, i.e.:

$$G = Gs + Gf + Gt$$

each contribution representing an output (9A, 9B, 9C) of a regulation loop of said regulating circuit (9) respectively.

4. An electric welding machine as claimed in claim 3, wherein said contribution Gs is obtained by a first regulator (REGs) which is designed to accomplish slow-dynamics low-pass filtering of the welding power, so that only the harmonic components sufficiently lower than flicker-causing frequencies are left in the power absorbed from the mains.

5. An electric welding machine as claimed in claim 3, wherein said contribution Gf is obtained by a second regulator (REGf) which is designed to maintain said second voltage ($V_{DC}$) between a lower limit voltage ($V_{DC,min}$) and an upper limit voltage ($V_{DC,max}$).

6. An electric welding machine as claimed in claim 3, wherein said contribution Gt is obtained by a third regulator (REGf) which is designed for management of start-up and shut-down transients of said welding machine (1).

7. An electric welding machine as claimed in claim 3, wherein said regulating circuit (9) comprises filtering means (FILT1, FILT2) for filtering said second voltage value ($V_{DC}$) on said energy accumulation means (5) and said value of power ($p_{DC}$) flowing into said accumulation means (5) respectively, said filtering means having a filtering frequency of substantially 100 Hz.

8. An electric welding machine as claimed in claim 1, wherein said power circuit comprises a down converter stage (9), which is designed to receive said second voltage ($V_{DC}$) at its input and generate a third DC voltage (Vdc''') at its output, which is available at said output stage (10) to generate said output voltage ($V_{sal}$).

9. An electric welding machine as claimed in claim 8, wherein said energy accumulation means (5) are interposed and in electric communication between the output of said up converter stage (3) and the input of said output converter stage (9).

10. An electric welding machine as claimed in claim 1, wherein said check means (20) comprise:

- a first regulating circuit (7), which is designed so that said second voltage (VDC) is free to oscillate within a range of values ($V_{th,l}$; Vth,h), so that said first regulating circuit (7) maintains the mean voltage value at the terminals of said energy accumulation means (5) equal to said predetermined voltage value ($V_{DC,ref}$), possibly depending on the operation state of the machine;
- a second regulating circuit (8), which is designed so that if said second voltage ($V_{DC}$) at the terminals of said energy accumulation means (5) reaches one of the limits of said range of voltage values ($V_{th,l}$; $V_{th,h}$), then said second voltage ($V_{DC}$) is maintained within the limits of said range of voltage values.

11. An electric welding machine as claimed in claim 10, wherein said first regulating circuit (7) comprises a first comparator device (7A) for comparing said second voltage ($V_{DC}$) at the terminals of said energy accumulation means (5) with said predetermined voltage value ($V_{DC,ref}$), a low pass filter (7C), whose passband is lower than the frequencies of the noise to be absorb d, a first regulator device (7B), whose gain is coordinated with said low-pass filter (7C), so that the assembly composed of the regulator (7B) and the low-pass filter (7C) generate a slow dynamics with respect to the frequencies of the noise to be absorb.

12. An electric welding machine as claimed in claim 10, wherein said second control circuit (8) comprises:

- a second comparator device (8A) connected in series with a first clipping circuit (8D), said second comparator device (8A) being adapted to compare said second voltage ($V_{DC}$) at the terminals of said energy accumulation means (5) with the voltage value ($V_{th,h}$) of the highest limit of the range of values, and said first clipping circuit (8D) being adapted to limit said second voltage ($V_{DC}$) to the voltage value ($V_{th,h}$) of the highest limit of the range of values;
- a third comparator device (8B) connected in series with a second clipping circuit (8E), said third comparator device (8B) being adapted to compare the second voltage ($V_{DC}$) at the terminals of said energy accumulation means (5) with the voltage value ($V_{th,l}$) of the lowest limit of the range of values, and said second clipping circuit (8E) being adapted to limit said second voltage ($V_{DC}$) to the voltage value ($V_{th,l}$) of the lowest limit of the range of values;
- a regulator (8C) having a high gain with respect to the gain value of said regulator (7B) to maintain said second voltage ($V_{DC}$) at the terminals of said energy accumulation means (5) within the limits of said range of values ($V_{th,l}$; $V_{th,h}$).

13. An electric welding machine as claimed in any preceding claims, wherein said AC/DC converter (2) comprises a rectifier for rectifying the AC power voltage ($V_{AC}$).

**Patentansprüche**

1. Elektro-Schweißgerät mit einer Leistungsschaltung zur Leistungsversorgung dieses Schweißgeräts vom Netz, wobei diese Leistungsschaltung Folgendes umfasst:

- eine AC/DC-Wandlerstufe (2), die gestaltet ist, um an ihrem Eingang eine Wechselspannung (VAC) vom Netz zu empfangen und an ihrem Ausgang eine erste Gleichspannung (Vrect) zu erzeugen;
- eine Aufwärtswandlerstufe (3), die gestaltet ist, um an ihrem Eingang die erste Gleichspannung (Vrect) zu empfangen und an ihrem Ausgang eine zweite Gleichspannung (VDC) zu erzeugen;

- eine Ausgangsstufe (10), die mit der Aufwärtswandlerstufe (3) elektrisch verbunden und gestaltet ist, um an ihrem Ausgang eine für den Schweißprozess geeignete Ausgangsspannung (Vsal) zu erzeugen;

- ein Paar Ausgangsanschlüsse (4A, 4B), die dazu gestaltet sind, eine Last daran angeschlossen zu haben, wobei die Ausgangsspannung (Vsal) an diesen Ausgangsanschlüssen zur Verfügung steht;

- Energiespeichermittel (5), die zwischen den Ausgang der Aufwärtswandlerstufe (3) und die Ausgangsstufe (10) geschaltet und in elektrischer Verbindung sind;

**dadurch gekennzeichnet, dass** es Steuermittel (6) zum Steuern der Aufwärtswandlerstufe (3) in Abhängigkeit vom Wert eines Bezugssignals (Iref) und Prüfmittel (20) zum Erzeugen dieses Bezugssignals (Iref) umfasst, die gestaltet sind, an ihrem Eingang zumindest den Wert der zweiten Spannung (VDC) an den Energiespeichermitteln (5) zu empfangen, so dass die Energiespeichermittel (5) Leistungsänderungen des Netzes aufnehmen können, wenn sich die Ausgangsspannung (Vsal) aufgrund der von der Last aufgenommenen Leistung ändert, um Spannungsschwankungen vom Typ Flicker zu begrenzen, die während des Schweißens im Netz induziert werden, und dadurch, dass diese Energiespeichermittel (5) eine Vielzahl von Kondensatorbatterien (C) umfassen, die in Abhängigkeit von der durch die Aufwärtswandlerstufe (3) zulässigen maximalen und minimalen Betriebsspannung und auch der Nennleistung des Schweißgeräts bemessen sind, wobei diese Vielzahl von Kondensatorbatterien (C) gestaltet ist, um als Energieschwungrad zu wirken, und, wenn Änderungen der Leistungsaufnahme eintreten, gestaltet ist, um eine Schwankung der aufgenommenen Leistung aufzunehmen und demzufolge die Störaussendung zu den Lasten zu begrenzen, die dem Schweißgerät elektrisch nahe sind.

2. Elektro-Schweißgerät nach Anspruch 1, wobei die Prüfmittel (20) dazu gestaltet sind, an ihrem Eingang den Wert der in die Speichermittel (5) fließenden Leistung (pDC) und den Wert eines Binärsignals (uon) zu empfangen, das repräsentativ für den Zustand des Schweißgeräts ist, wobei dieses Bezugssignal (Iref) wie folgt dargestellt werden kann:

$$\mathrm{Iref} = G* \,|V_{AC}\mathrm{filt}|$$

wobei:

- G ein Signal ist, das vom Wert der zweiten Spannung (VDC), dem Wert der in die Speichermittel (5) fließenden Leistung (pDC) und dem Wert des Binärsignals (uon) abhängig ist, und
- VAC,filt die erste Gleichspannung (Vrect) repräsentiert, das heißt die Versorgungsspannung (VAC), die vorzugsweise von einem Filterblock (FILT3) der Leistungsschaltung (1) gefiltert wird.

3. Elektro-Schweißgerät nach Anspruch 2, wobei die Prüfmittel (20) eine Regelschaltung (9) umfassen, die gestaltet ist, um das Signal G aus der Kombination von drei Beiträgen zu erzeugen, d.h.:

$$G = Gs + Gf + Gt$$

wobei jeder Beitrag jeweils einen Ausgang (9A, 9B, 9C) einer Regelschleife dieser Regelschaltung (9) repräsentiert.

4. Elektro-Schweißgerät nach Anspruch 3, wobei der Beitrag Gs durch einen ersten Regler (REGs) erhalten wird, der gestaltet ist, um die Tiefpassfilterung für langsame Dynamik der Schweißleistung zu bewerkstelligen, so dass nur die harmonischen Teilschwingungen, die ausreichend niedriger als Flicker verursachende Frequenzen sind, in der vom Netz aufgenommenen Leistung verbleiben.

5. Elektro-Schweißgerät nach Anspruch 3, wobei der Beitrag Gf durch einen zweiten Regler (REGt) erhalten wird, der gestaltet ist, um die zweite Spannung ($V_{DC}$) zwischen einer unteren Grenzspannung ($V_{DC,min}$) und einer oberen Grenzspannung ($V_{DCmax}$) zu halten.

6. Elektro-Schweißgerät nach Anspruch 3, wobei der Beitrag Gt durch einen dritten Regler (REGf) erhalten wird, der für das Management der Ein- und Ausschalttransienten des Schweißgeräts (1) gestaltet ist.

7. Elektro-Schweißgerät nach Anspruch 3, wobei die Regelschaltung (9) Filtermittel (FILT1, FILT2) zum Filtern des zweiten Spannungswerts ($V_{DC}$) an den Energiespeichermitteln (5) beziehungsweise des Werts der in diese Speichermittel (5) fließenden Leistung ($p_{DC}$) umfasst, wobei diese Filtermittel eine Filterfrequenz von im Wesentlichen 100 Hz aufweisen.

8. Elektro-Schweißgerät nach Anspruch 1, wobei die Leistungsschaltung eine Abwärtswandlerstufe (9) umfasst, die gestaltet ist, um an ihrem Eingang die zweite Spannung ($V_{DC}$) zu empfangen und an ihrem Ausgang eine dritte Gleichspannung (Vdc''') zu erzeugen, die an der Ausgangsstufe (10) zur Verfügung steht, um die Ausgangsspannung ($V_{sal}$) zu erzeugen.

9. Elektro-Schweißgerät nach Anspruch 8, wobei die Energiespeichermittel (5) zwischen den Ausgang der Aufwärtswandlerstufe (3) und den Eingang der Ausgangswandlerstufe (9) geschaltet und in elektrischer Verbindung sind.

10. Elektro-Schweißgerät nach Anspruch 1, wobei die Prüfmittel (20) Folgendes umfassen:

- eine erste Regelschaltung (7), die derart gestaltet ist, dass die zweite Spannung (VDC) in einem Wertebereich ($V_{th,l}$; $V_{th,h}$) frei schwanken kann, so dass diese erste Regelschaltung (7) den Spannungsmittelwert an den Anschlüssen der Energiespeichermittel (5) auf dem vorgegebenen Spannungswert ($V_{DC,ret}$) hält, nach Möglichkeit in Abhängigkeit vom Betriebszustand des Geräts;
- eine zweite Regelschaltung (8), die derart gestaltet ist, dass dann, wenn die zweite Spannung ($V_{DC}$) an den Anschlüssen der Energiespeichermittel (5) einen der Grenzwerte des Spannungswertebereichs ($V_{th,l}$; $V_{th,h}$) erreicht, diese zweite Spannung ($V_{DC}$) innerhalb der Grenzen dieses Spannungswertebereichs gehalten wird.

11. Elektro-Schweißgerät nach Anspruch 10, wobei die erste Regelschaltung (7) eine erste Vergleichseinrichtung (7A) zum Vergleichen der zweiten Spannung ($V_{DC}$) an den Anschlüssen der Energiespeichermittel (5) mit dem vorgegebenen Spannungswert ($V_{DC,ref}$), ein Tiefpassfilter (7C), dessen Durchlassbereich niedriger als die Frequenzen des zu dämpfenden Rauschens ist, und eine erste Regeleinrichtung (7B), deren Verstärkung mit dem Tiefpassfilter (7C) koordiniert ist, umfasst, so dass die aus dem Regler (7B) und dem Tiefpassfilter (7C) bestehende Anordnung eine langsame Dynamik gegenüber den Frequenzen des zu dämpfenden Rauschens erzeugt.

12. Elektro-Schweißgerät nach Anspruch 10, wobei die zweite Regelschaltung (8) Folgendes umfasst:

- eine zweite Vergleichseinrichtung (8A), die in Reihe mit einer ersten Begrenzerschaltung (8D) geschaltet ist, wobei diese zweite Vergleichseinrichtung (8A) dazu eingerichtet ist, die zweite Spannung ($V_{DC}$) an den Anschlüssen der Energiespeichermittel (5) mit dem Spannungswert ($V_{th,h}$) der Obergrenze des Wertebereichs zu vergleichen, und wobei diese erste Begrenzerschaltung (8D) dazu eingerichtet ist, diese zweite Spannung ($V_{DC}$) auf den Spannungswert ($V_{th,h}$) der Obergrenze des Wertebereichs zu begrenzen;
- eine dritte Vergleichseinrichtung (8B), die in Reihe mit einer zweiten Begrenzerschaltung (8E) geschaltet ist, wobei diese dritte Vergleichseinrichtung (8B) dazu eingerichtet ist, die zweite Spannung ($V_{DC}$) an den Anschlüssen der Energiespeichermittel (5) mit dem Spannungswert ($V_{th,l}$) der Untergrenze des Wertebereichs zu vergleichen, und wobei diese zweite Begrenzerschaltung (8E) dazu eingerichtet ist, diese zweite Spannung ($V_{DC}$) auf den Spannungswert ($V_{th,l}$) der Untergrenze des Wertebereichs zu begrenzen;
- einen Regler (8C) mit einer gegenüber dem Verstärkungswert des Reglers (7B) hohen Verstärkung, um die zweite Spannung ($V_{DC}$) an den Anschlüssen der Energiespeichermittel (5) innerhalb der Grenzen des Wertebereichs ($V_{th,l}$; $V_{th,h}$) zu halten.

13. Elektro-Schweißgerät nach einem der vorhergehenden Ansprüche, wobei der AC/DC-Wandler (2) einen Gleichrichter zum Gleichrichten der Wechselspannung ($V_{AC}$) umfasst.


## Revendications

1. Machine de soudage électrique ayant un circuit de puissance pour fournir l'énergie à ladite machine de soudage à partir du secteur, ledit circuit de puissance comprenant :

- un étage convertisseur courant alternatif/courant continu (2), conçu pour recevoir une tension alternative (VAC) provenant dudit secteur sur son entrée et pour générer une première tension continue (Vrect) sur sa sortie ;
- un étage convertisseur élévateur (3), conçu pour recevoir ladite première tension continue (Vrect) sur son entrée et pour générer une deuxième tension continue (VDC) sur sa sortie ;
- un étage de sortie de sortie (10) est en communication électrique avec ledit étage convertisseur élévateur (3), et conçu pour générer une tension de sortie (Vsal) adaptée pour le processus de soudage sur sa sortie ;
- une paire de bornes (4A, 4B) conçues pour avoir une charge connectée à celles-ci, ladite tension de sortie (Vsal) étant disponible au niveau desdites bornes de sortie ;
- des moyens d'accumulation d'énergie (5) interposés et en communication électrique entre la sortie dudit étage convertisseur élévateur (3) et l'étage de sortie (10) ;
**caractérisé en ce qu'**il comprend des moyens de commande (6) pour commander ledit étage convertisseur élévateur (3) en fonction de la valeur d'un signal de référence (Iref), des moyens de contrôle (20) pour générer ledit signal de référence (Iref), qui sont configurés pour recevoir sur leur entrée au moins la valeur de ladite deuxième tension (VDC) sur lesdits moyens d'accumulation d'énergie (5), de manière que lesdits moyens d'accumulation d'énergie (5) soient capables d'absorber des variations de puissance dudit secteur lorsque ladite tension de sortie (Vsal) varie, à cause de la puissance absorbée par la charge, pour limiter des fluctuations de tension de type papillonnement induites dans le secteur durant le soudage,
et **en ce que** lesdits moyens d'accumulation d'énergie (5) comprennent une pluralité de batteries de condensateurs (C) qui sont dimensionnées en fonction de la tension de fonctionnement maximale et minimale admissible pour ledit étage convertisseur élévateur (3) ainsi que la puissance nominale de ladite machine de soudage, ladite pluralité de batteries de condensateurs (C) étant configurée pour agir comme un volant d'inertie d'énergie et, lorsque des variations de consommation de puissance se produisent, étant configurée pour absorber une fluctuation de la puissance qui est consonnée et, en conséquence, pour limiter le bruit dû aux charges électriquement proches de la machine de soudage.

2. Machine de soudage électrique selon la revendication 1, dans laquelle lesdits moyens de contrôle (20) sont conçus pour recevoir sur leur entrée la valeur de la puissance (pDC) circulant dans lesdits moyens d'accumulation (5) et la valeur d'un signal binaire (uon) représentatif de l'état de ladite machine de soudage, ledit signal de référence (Iref) étant adapté pour être exprimé comme :

$$\mathtt{Iref\ =\ G*|V_{AC},filt|}$$

où :

- G est un signal qui est une fonction de la valeur de ladite deuxième tension (VDC), la valeur de la puissance (pDC) circulant dans lesdits moyens d'accumulation (5) et la valeur du signal binaire (uon) et
- VAC,filt représentant ladite tension continue (Vrect), c'est-à-dire la tension d'alimentation (VAC), de préférence filtrée par un bloc de filtrage (FILT3) dudit circuit de puissance (1).

3. Machine de soudage électrique selon la revendication 2, dans laquelle lesdits moyens de contrôle (20) comprennent un circuit régulateur (9) conçu pour générer ledit signal G à partir de la combinaison de trois contributions, c'est-à-dire :

$$\mathtt{G\ =\ Gs\ +\ Gf\ +\ Gt}$$

chaque contribution représentant respectivement une sortie (9A, 9B, 9C) d'une boucle de régulation dudit circuit régulateur (9).

4. Machine de soudage électrique selon la revendication 3, dans laquelle ladite contribution Gs est obtenue par un premier régulateur (REGs) qui est conçu pour accomplir un filtrage passe-bas à dynamique lente de la puissance de soudage, de manière que seules les composantes harmoniques suffisamment inférieures à des fréquences provoquant un papillotement soient laissées dans l'énergie absorbée à partir du secteur.

5. Machine de soudage électrique selon la revendication 3, dans laquelle ladite contribution Gf est obtenue par un deuxième régulateur (REGf) qui est conçu pour maintenir ladite deuxième tension ($V_{DC}$) entre une tension limite inférieure ($V_{DC,min}$) et une tension limite supérieure ($V_{DC,max}$).

6. Machine de soudage électrique selon la revendication 3, dans laquelle ladite contribution Gt est obtenue par un troisième régulateur (REGf) qui est conçu pour la gestion de transitoires de démarrage et d'arrêt de ladite machine de soudage (1).

**7.** Machine de soudage électrique selon la revendication 3, dans laquelle ledit circuit régulateur (9) comprend des moyens de filtrage (FILT1, FILT2) pour filtrer respectivement ladite deuxième valeur de tension ($V_{DC}$) sur lesdits moyens d'accumulation d'énergie (5) et ladite valeur de puissance ($p_{DC}$) circulant dans lesdits moyens d'accumulation (5), lesdits moyens de filtrage ayant une fréquence de filtrage de sensiblement 100 Hz.

**8.** Machine de soudage électrique selon la revendication 1, dans laquelle ledit circuit de puissance comprend un étage convertisseur abaisseur (9), qui est conçu pour recevoir ladite deuxième tension ($V_{DC}$) sur son entrée et générer une troisième tension continue (Vdc''') sur sa sortie, qui est disponible au niveau dudit étage de sortie (10) pour générer ladite tension de sortie ($V_{sal}$).

**9.** Machine de soudage électrique selon la revendication 8, dans laquelle lesdits moyens d'accumulation d'énergie (5) sont interposés et en communication électrique entre la sortie dudit étage convertisseur élévateur (3) et l'entrée dudit étage convertisseur de sortie (9).

**10.** Machine de soudage électrique selon la revendication 1, dans laquelle lesdits moyens de contrôle (20) comprennent :

- un premier circuit régulateur (7), qui est conçu de manière que ladite deuxième tension (VDC) soit libre d'osciller dans une plage de valeurs ($V_{th,l}$ ; $V_{th,h}$), de manière que ledit premier circuit régulateur (7) maintienne la valeur de tension moyenne aux bornes desdits moyens d'accumulation d'énergie (5) égale à ladite valeur de tension prédéterminée ($V_{DC,ref}$), éventuellement en fonction de l'état de fonctionnement de la machine ;
- un deuxième circuit régulateur (8), qui est conçu de manière que, si ladite deuxième tension ($V_{DC}$) aux bornes desdits moyens d'accumulation d'énergie (5) atteint une des limites de ladite plage de valeurs de tension ($V_{th,l}$ ; $V_{th,h}$), ensuite ladite deuxième tension ($V_{DC}$) soit maintenue dans les limites de ladite plage de valeurs de tension.

**11.** Machine de soudage électrique selon la revendication 10, dans laquelle ledit premier circuit régulateur (7) comprend un premier dispositif comparateur (7A) pour comparer ladite deuxième tension ($V_{DC}$) aux bornes desdits moyens d'accumulation d'énergie (5) avec ladite valeur de tension prédéterminée ($V_{Dc,ref}$), un filtre passe-bas (7C), dont la bande passante est inférieure aux fréquences du bruit à absorber, un premier dispositif régulateur (7B), dont le gain est coordonné avec ledit filtre passe-bas (7C), de manière que l'ensemble composé du régulateur (7B) et du filtre passe-bas (7C) génère une dynamique lente par rapport aux fréquences du bruit à absorber.

**12.** Machine de soudage électrique selon la revendication 10, dans laquelle le deuxième circuit de commande (8) comprend :

- un deuxième circuit comparateur (8A) connecté en série avec un premier circuit d'écrêtage (8D), ledit deuxième circuit comparateur (8A) étant adapté pour comparer ladite deuxième tension ($V_{DC}$) aux bornes desdits moyens d'accumulation d'énergie (5) avec la valeur de tension ($V_{th,h}$) de la limite la plus élevée de la plage de valeurs et ledit premier circuit d'écrêtage (8D) étant adapté pour limiter ladite deuxième tension ($V_{DC}$) à la valeur de tension ($V_{th,h}$) de la limite la plus élevée de la plage de valeurs ;
- un troisième circuit comparateur (8B) connecté en série avec un deuxième circuit d'écrêtage (8E), ledit troisième circuit comparateur (8B) étant adapté pour comparer la deuxième tension ($V_{DC}$) aux bornes desdits moyens d'accumulation d'énergie (5) avec la valeur de tension ($V_{th,l}$) de la limite la plus basse de la plage de valeurs et ledit deuxième circuit d'écrêtage (8E) étant adapté pour limiter ladite deuxième tension ($V_{DC}$) à la valeur de tension ($V_{th,l}$) de la limite la plus basse de la plage de valeurs ;
- un régulateur (8C) ayant un gain élevé par rapport à la valeur de gain dudit régulateur (7B) pour maintenir ladite deuxième tension ($V_{DC}$) aux bornes desdits moyens d'accumulation d'énergie (5) dans les limites de ladite plage de valeurs de tension ($V_{th,l}$ ; $V_{th,h}$) .

**13.** Machine de soudage électrique selon l'une quelconque des revendications précédentes, dans laquelle ledit convertisseur courant alternatif/courant continu (2) comprend un redresseur pour redresser la tension d'alimentation en courant alternatif ($V_{AC}$).

FIG.1

FIG.2

FIG.3

FIG.4

FIG.5

FIG.6

AC current (without flicker compensation)

FIG.8

AC current (with flicker compensation)

FIG.7